# EUROPÄISCHE PATENTANMELDUNG

(11) **EP 1 974 868 A2**
(43) Veröffentlichungstag der Anmeldung: **01.10.2008**
(21) Anmeldenummer: 07022801.0
(22) Anmeldetag: 24.11.2007
(51) Int. Cl.: B25J 9/16

(54) **Verfahren zum Integrieren von Peripheriekomponenten in eine technische Anlage**

(30) Priorität: 29.11.2006 DE 102006056214
(71) Anmelder: KUKA Roboter GmbH, 86165 Augsburg (DE)
(72) Erfinder: Bischoff, Rainer, 86163 Augsburg (DE); Hietmann, Gerhard, 86405 Herbertshofen (DE)
(74) Vertreter: Lempert, Jost

(57) **Zusammenfassung**

Die Erfindung betrifft ein Verfahren zum Integrieren von einer oder mehreren Einzelkomponente(n), wie Werkzeuge, in eine von einer Steuereinheit überwachte technische Anlage, wie einen Industrieroboter. Sie zeichnet sich dadurch aus, dass in jeweils einer mit der Einzelkomponente verbundenen Funkwellensendeeinheit gespeicherte betriebsspezifische Daten der Einzelkomponente(n) mittels der jeweiligen Funkwellensendeeinheit an die Steuereinheit übertragen werden. Dies führt zu erheblichen Vorteilen im Hinblick sowohl auf die Fehleranfälligkeit während und nach dem Integrationsprozess der Einzelkomponente, als auch auf die Wartung und Reparatur der technischen Anlage.

Die Erfindung betrifft weiterhin eine auf diese Weise in eine technische Anlage integrierbare Einzelkomponente.

## Beschreibung

Die Erfindung betrifft ein Verfahren zum Integrieren einer oder mehrerer Einzelkomponente(n), wie Werkzeuge, in eine von einer Steuereinheit überwachte technische Anlage, wie einen Industrieroboter. Die Erfindung betrifft weiterhin eine gattungsgemäße Einzelkomponente sowie eine gattungsgemäße technische Anlage.

Mit steigenden Anforderungen an Produktivität und Effizienz erhöht sich die Komplexität automatisierter Fertigungsanlagen kontinuierlich, sowohl in Bezug auf die Anzahl der zu integrierenden Einzelkomponenten als auch der damit verbundenen Steuer- und Sicherheitstechnik. Zwangsläufig führt dies zu wachsender Unüberschaubarkeit und Fehleranfälligkeit, insbesondere bei manuell herbeigeführter Anpassung der Gesamtanlage an neue Produktionsanforderungen, Fehlererkennung, Reparatur etc., so dass solche Dienste nur von speziell ausgebildetem Fachpersonal durchführbar sind. Gleichzeitig steigt der mit der Systemwartung verbundene Verwaltungsaufwand mit der Anzahl fehleranfälliger Einzelkomponenten.

Beispielsweise kommen in einer Anlage von Industrierobotern zahlreiche Peripheriekomponenten, insbesondere unterschiedliche Werkzeugtypen, zur Bearbeitung eines spezifischen Fertigungsprodukts zum Einsatz. Die spezifische Ausbildung erfordert, dass Betriebsparameter vor Inbetriebnahme des Werkzeugs zu ermitteln sind. Beim Integrieren in die Anlage muss neben der Montage des Werkzeugs am jeweiligen Roboter die Anlage neu konfiguriert werden, d.h. die zugehörigen Betriebsparameter müssen der Anlagensteuerung manuell oder mittels eines Datenträgers übermittelt werden. Letzteres beinhaltet neben des unerwünschten zeitlichen Aufwands eine zusätzliche Fehlerquelle bei der Konfiguration des Systems.

Neben der im allgemeinen produktspezifischen, wenig standardisierten Ausbildung industrieller Fertigungsanlagen ergeben sich auch durch die räumlichen Ausmaße einer solchen Probleme beim Integrieren neuer Einzelkomponenten. Dabei ist insbesondere eine sehr komplexe Infrastruktur zu bewältigen, beispielsweise ein erheblicher Verkabelungsaufwand der Einzelkomponenten, oder kostenintensive Busverbindungen, um das Abrufen benötigter Konfigurationsdaten von der Steuereinheit zu ermöglichen. Dadurch sind sowohl der Anzahl, als auch der Art der Anordnung neu zu integrierender Peripheriekomponenten technologische Grenzen gesetzt.

Es sind Funkwellensendeeinheiten, insbesondere sogenannte Transponder, mit einer zentralen Empfangseinheit bekannt. Mit einer solchen Anordnung können chaotisch angeordnete Objekte anhand eines im Transponder gespeicherten, eindeutig zugeordneten Codes zentral erfasst werden. Dabei sind sogenannte passive Transponder bekannt, die keine eigene Energieversorgung besitzen, und ihre Versorgungsspannung durch Induktion aus den Funksignalen der Empfangseinheit gewinnen. Dadurch werden Kosten und Gewicht der Transponder reduziert, jedoch verringert sich gleichzeitig die Reichweite des Funksignals. Aktive Transponder besitzen eine eigene Energieversorgung und erzielen eine erheblich höhere Reichweite, verursachen aber auch erheblich höhere Kosten pro Einheit. Transponder werden vor allem als Identifizierungssysteme zum Identifizieren von gefertigten Produkten und anderen Objekten mittels eines Identifikationscodes verwendet.

Der Erfindung liegt die Aufgabe zugrunde, ein Verfahren der eingangs genannten Art zu schaffen, das unter Vermeidung der vorher genannten Nachteile insbesondere ein konstruktiv einfaches, kostengünstiges und fehlerloses Integrieren von Einzelkomponenten in eine technische Anlage ermöglicht, um somit den Aufwand bei der Wartung bzw. Anpassung einer Fertigungsanlage möglichst gering zu halten. Der Erfindung liegt weiterhin die Aufgabe zugrunde, eine auf diese Weise integrierbare Einzelkomponente zu schaffen.

Erfindungsgemäß wird die genannte Aufgabe mit einem Verfahren der eingangs genannten Art gelöst, welches dadurch gekennzeichnet ist, dass in jeweils einer mit der Einzelkomponente verbundenen Funkwellensendeeinheit gespeicherte betriebsspezifische Daten der Einzelkomponente(n) mittels der jeweiligen Funkwellensendeeinheit an die Steuereinheit übertragen werden. In einer gattungsgemäßen Einzelkomponente wird die Aufgabe dadurch gelöst, dass diese eine Funkwellensendeeinheit aufweist, die zum Übertragen betriebsspezifischer Daten ausgebildet ist. Eine gattungsgemäße technische Anlage weist hierzu wenigstens eine solche Einzelkomponente auf.

Erfindungsgemäß sind also betriebsspezifische Daten einer Einzelkomponente in einer jeweiligen fest verbundenen Funkwellensendeeinheit hinterlegt und werden bei Bedarf auf elektromagnetischem Wege kabellos an die Steuereinheit übertragen. Somit entfällt zum einen der Logistikaufwand bei einer zentralen Verwaltung zahlreicher Peripheriekomponenten, als auch die Fehleranfälligkeit bei manueller Übertragung neuer betriebsspezifischer Daten an die Steuereinheit.

Es werden also zum Integrieren benötigte Betriebsdaten übermittelt, die insbesondere das Betriebsalter, auftretende Fehlfunktionen, Seriennummer, Serientyp, Anschlussdaten und/oder benötigte Konfigurationsdaten der Einzelkomponente(n) umfassen können. Ein Identifizieren neu integrierter Komponenten von der Steuereinheit kann mittels Zuordnen eines Identifikationscodes im Anschluss oder im Vorfeld des Integrationsprozesses durchgeführt werden.

Das erfindungsgemäße Verfahren hat insbesondere dann Vorteile, wenn neue fertigungsspezifische Komponenten integriert werden sollen, beispielsweise Werkzeuge mit nicht standardisierten Abmessungen oder Sensoren mit spezifischen Eichparametern, welche im Vorfeld des Integrationsprozesses ermittelt werden. Diese betriebsspezifischen Daten werden erfindungsgemäß vor dem Integrieren der Einzelkomponente(n) in die zugeordnete(n) Funkwellensendeeinheit(en) geschrieben und sind somit jederzeit von der Anlagensteuereinheit abrufbar. Ein zeitaufwändiges und Fehler verursachendes manuelles Datenübertragungsverfahren entfällt also vor dem eigentlichen Neukonfigurieren der Anlage, welches anschließend durch Programmieren oder auch automatisch von der Steuereinheit durchführbar ist.

In bevorzugter Ausführung sind also nur den jeweiligen Einzelkomponenten zugeordnete Betriebsdaten in der/den Funkwellensendeeinheiten gespeichert, um jederzeit bei Bedarf eine drahtlose Überführung derselben an die Steuereinheit zu ermöglichen, bevor der eigentliche Konfigurationsprozess beginnt. Dabei ist die in den Funkwellensendeeinheiten gespeicherte Datenmenge gering, so dass auch beispielsweise preisgünstige Transponder eingesetzt werden können, und das erfindungsgemäße Verfahren ist zudem plattformunabhängig, so dass nach Abmontieren der Einzelkomponente diese beispielsweise problemlos in neu entwickelte Anlagen integriert und getestet werden kann. Eine andere bevorzugte Weiterbildung sieht vor, dass anlagenspezifische Software-Komponenten gespeichert sind, so dass die Systemkonfiguration nach der Datenübertragung automatisch verläuft. Alternativ können auch durch einen Identifikationscode, der von der Funkwellensendeeinheit einer Einzelkomponente übertragen wird, in der Steuereinheit zugeordnete Software-Komponenten (z.B. Treibersoftware) zur automatischen Konfiguration aufgerufen werden, wobei diese jedoch der Steuereinheit vorab manuell zugeführt werden müssen.

In weiterhin bevorzugter Ausführung empfängt/empfangen auch die Funkwellensendeeinheit(en) Funksignale; sie ist/sind demgemäß auch als Funkwellenempfangseinheit(en) bzw. als Funkwellensende- und Empfangseinheit(en) ausgebildet. Dies ermöglicht zum einen, dass vor dem Integrieren der Einzelkomponente(n) in die technische Anlage die betriebsspezifischen Daten vorab an die Funkwellensendeeinheit(en) übertragen werden. Insbesondere entfällt hierdurch ein manuelles Beschreiben der Funkwellensendeeinheit(en) mit Betriebsdaten und es können eine Vielzahl von Komponenten gleichzeitig beschrieben werden. Zum anderen kann nach dem Integrieren auch ein Signal von der Steuereinheit empfangen werden, wodurch ein Übertragen der Betriebsdaten an dieselbe ausgelöst werden kann. In bevorzugter Ausbildung erfolgt die Energieversorgung der Funkwellensendeeinheit(en) durch das von der Steuereinheit übertragene Funksignal, so dass beispielsweise kostengünstige passive Transponder von geringer Größe verwendet werden können.

In dem von der Steuereinheit übertragenen Signal können auch weitere Betriebsdaten an die Funkwellensendeeinheit(en) übermittelt werden. Hierbei kann es sich beispielsweise um Zeitinformationen handeln, wie das Betriebsalter der Einzelkomponente(n), so dass nach deren Abmontieren die benötigte Information andernorts ausgelesen werden kann. Dies kann beispielsweise bei anstehenden Wartungsaufgaben, einem temporären Mieten/Vermieten der Einzelkomponenten oder dem Wiederverwerten von Einzelkomponenten einer stillgelegten Fertigungsanlage von Nutzen sein. Auch bei einer Fehlfunktion, die von der Steuereinheit erfasst wurde, können relevante Betriebsdaten übertragen werden und somit Reparaturvorgänge erleichtert werden.

Insbesondere können von der Steuereinheit auch anhand der übermittelten betriebsspezifischen Daten einer oder mehrerer Funkwellensendeeinheit(en) weitere betriebsspezifische Daten ermittelt und an die Einzelkomponenten übertragen werden, die sich aus dem Zusammenwirken mehrerer Einzelkomponenten ergeben. Auch diese können beispielsweise zu Reparaturzwecken oder zum Nachvollziehen der Betriebshistorie der Einzelkomponenten herangezogen werden.

In einer Weiterbildung des erfindungsgemäßen Verfahrens können die betriebsspezifischen Daten auch direkt an der/den Funkwellensendeeinheit(en) in einer darin vorgesehenen Prozessoreinheit verarbeitet werden, um beispielsweise extern ermittelte und zugeführte Messdaten in ein anlageninternes Format zu verwandeln, oder Betriebsdaten mit einer der jeweiligen Funkwellensendeeinheit zugeordneten Verschlüsselung zu codieren. Durch ein solches Verschlüsseln vor der Datenübertragung kann beispielsweise ein Verwechseln der Steuereinheit von Betriebsdaten unterschiedlicher Einzelkomponenten ausgeschlossen werden. Oder es kann dem Verkauf und Integrieren von Plagiaten und billigen Imitationen von hochwertigen Einzelkomponenten vorgebeugt werden. Der Entschlüsselungscode kann der Steuereinheit vorab manuell oder durch ein Funksignal mitgeteilt werden.

Nachfolgend ist die Erfindung anhand bevorzugter Ausführungsformen unter Bezugnahme auf die Zeichnungen näher erläutert, anhand welcher sich weitere Eigenschaften und Vorteile der Erfindung ergeben. Es zeigen:
- Fig. 1: eine schematische Darstellung eines in einem Industrieroboter integrierten Werkzeugs, das erfindungsgemäß eine Funkwellensendeeinheit aufweist;
- Fig. 2: ein Flussdiagramm eines erfindungsgemäßen Verfahrens zum Integrieren einer Einzelkomponente in eine technische Anlage;

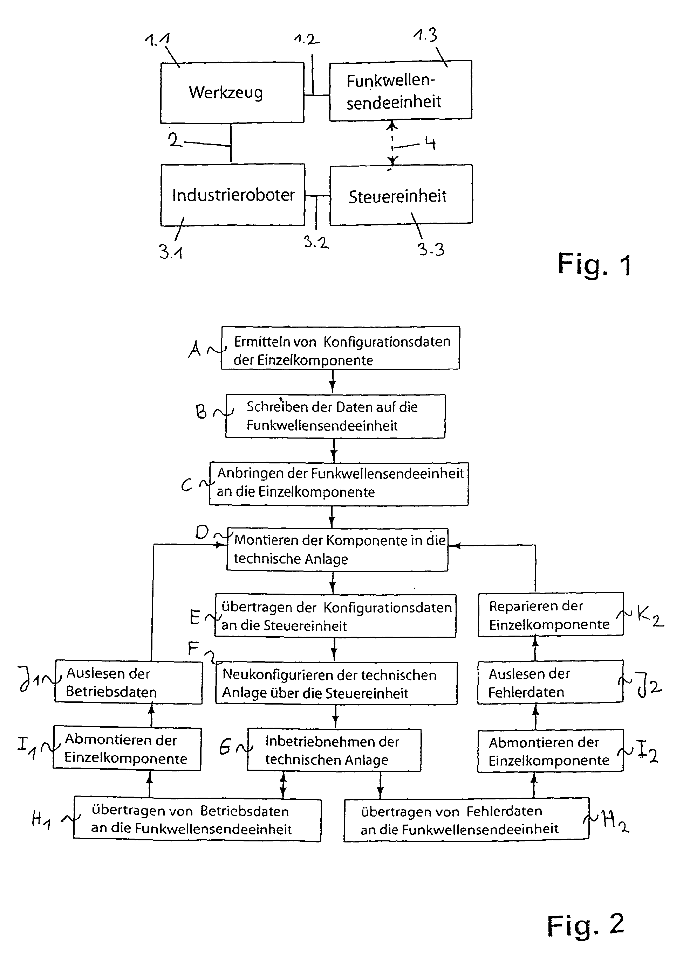

Die Fig. 1 zeigt eine mit einer technischen Anlage, wie einen Roboter, zu verbindende Einzelkomponente 1.1 in Form eines Werkzeugs, an das über eine feste, vorzugsweise nicht lösbare bzw. nicht zerstörungsfrei lösbare Verbindung 1.2, wie eine Klebverbindung, eine Funkwellensendeeinheit 1.3 angebracht ist. Über eine weitere feste Verbindung 2, wie eine lösbare formschlüssige Verbindung (Bajonettverbindung, Schraubverbindung), ist das Werkzeug 1.1 an einen Industrieroboter 3.1 montiert, welcher beispielsweise über ein Kabel 3.2 von einer Steuereinheit 3.3 überwacht wird. Die Funkwellensendeeinheit 1.3 und die Steuereinheit 3.3 sind erfindungsgemäß derart ausgebildet, dass über den Funksignalweg 4 das Übermitteln von betriebsspezifischen Daten des Werkzeugs 1.1 ermöglicht wird.

Eine bevorzugte Ausgestaltung des erfindungsgemäßen Verfahrens ist in Fig. 2 in einem Flussdiagramm dargestellt. Vor dem Integrieren der Einzelkomponente 1.1 in die technische Anlage 3.1 werden benötigte Konfigurationsdaten ermittelt (Schritt A), welche im darauffolgenden Schritt (Schritt B) auf die Funkwellensendeeinheit 1.3 geschrieben werden. Nachdem die Funkwellensendeeinheit 1.3 permanent mit der Einzelkomponente 1.1 verbunden wurde (Schritt C), wird diese in die technische Anlage 3.1 montiert (Schritt D). Nun werden die vorher ermittelten Konfigurationsdaten über ein Funksignal an die Steuereinheit 3.3 übertragen (Schritt E). Daraufhin wird ein Neukonfigurieren der technischen Anlage 3.1 über die Steuereinheit 3.3 durchgeführt (Schritt F), worauf die technische Anlage 3.1 mit dem neu integrierten Werkzeug 1.1 in Betrieb genommen werden kann (Schritt G).

Dabei können fortlaufend weitere Betriebsdaten von der Steuereinheit 3.3 an die Funkwellensendeeinheit 1.3 bzw. auf dem umgekehrten Signalweg über Funkwellen ausgetauscht werden (Schritt H₁). Falls ein Abmontieren der Einzelkomponente 1.1 nötig sein sollte (Schritt I₁), können direkt im Anschluss aus der angebrachten Funkwellensendeeinheit 1.3 Betriebsdaten ausgelesen werden (Schritt J₁), worauf die Einzelkomponente 1.1 in dieselbe oder eine andere technische Anlage montiert werden kann (Schritt D). Da die zum Integrieren benötigten Konfigurationsdaten in der Funkwellensendeeinheit 1.3 bereits hinterlegt sind, können diese von derselben nun direkt von der Steuereinheit ermittelt werden (Schritt E).

Im Falle eines auftretenden Fehlers während des Anlagenbetriebs werden Fehlerdaten von der Steuereinheit 3.3 an die Funkwellensendeeinheit 1.3 (Schritt H₂) vor dem Abmontieren der Einzelkomponente 1.1 (Schritt I₂) übertragen. Diese kann nun zur Reparatur (Schritt K₂) eingeschickt werden, wo benötigte Informationen (Schritt J₂) aus der Funkwellensendeeinheit 1.3 ausgelesen werden können.

### Bezugszeichenliste

- 1.1: Werkzeug
- 1.2: Klebverbindung
- 1.3: Funkwellensendeeinheit
- 2: Schraubverbindung
- 3.1: Industrieroboter
- 3.2: Kabel
- 3.3: Steuereinheit
- 4: Funksignalweg

## Patentansprüche

1. Verfahren zum Integrieren von einer oder mehreren Einzelkomponente(n) (1.1), wie Werkzeuge, in eine von einer Steuereinheit (3.3) überwachte technische Anlage (3.1), wie einen Industrieroboter, **dadurch gekennzeichnet, dass** in jeweils einer mit der Einzelkomponente (1.1) verbundenen Funkwellensendeeinheit (1.3) gespeicherte betriebsspezifische Daten der Einzelkomponente(n) (1.1) mittels der jeweiligen Funkwellensendeeinheit (1.3) an die Steuereinheit (3.3) übertragen werden.

2. Verfahren nach Anspruch 1, **dadurch gekennzeichnet, dass** die betriebsspezifischen Daten das Betriebsalter, auftretende Fehlfunktionen, Seriennummer, Serientyp, Anschlussdaten und/oder benötigte Konfigurationsdaten der Einzelkomponente(n) (1.1) umfassen.

3. Verfahren nach Anspruch 1 oder 2, **dadurch gekennzeichnet, dass** vor dem Integrieren der Einzelkomponente(n) (1.1) in die technische Anlage (3.1) die betriebsspezifischen Daten in die Funkwellensendeeinheit(en) (1.3) geschrieben werden.

4. Verfahren nach einem der Ansprüche 1 bis 3, **dadurch gekennzeichnet, dass** die Funkwellensendeeinheit(en) (1.3) auch Funksignale (4) empfängt/empfangen.

5. Verfahren nach Anspruch 3 und 4, **dadurch gekennzeichnet, dass** vor dem Integrieren der Einzelkomponente(n) (1.1) in die technische Anlage (2.1) die betriebsspezifischen Daten vorab an die Funkwellensendeeinheit(en) (1.3) übertragen wird/werden.

6. Verfahren nach Anspruch 4 oder 5, **dadurch gekennzeichnet, dass** die betriebsspezifischen Daten von der/den Funkwellensendeeinheit(en) (1.3) nach Empfang eines Funksignals (4) von der Steuereinheit (3.3) an die Steuereinheit (3.3) übertragen werden.

7. Verfahren nach Anspruch 6, **dadurch gekennzeichnet, dass** die Energieversorgung der Funkwellensendeeinheit(en) (1.3) durch das von der Steuereinheit (3.3) übertragene Funksignal (4) erfolgt.

8. Verfahren nach einem der Ansprüche 4 bis 7, **dadurch gekennzeichnet, dass** nach dem Integrieren der Einzelkomponente(n) (1.1) in die technische Anlage (3.1) weitere betriebsspezifischen Daten von der Steuereinheit (3.3) an die Funkwellensendeeinheit(en) (1.3) übertragen wird/werden.

9. Verfahren nach einem der Ansprüche 1 bis 8, **dadurch gekennzeichnet, dass** die Steuereinheit (3.3) anhand der übermittelten betriebsspezifischen Daten einer oder mehrerer Funkwellensendeeinheit(en) (1.3) weitere betriebsspezifische Daten einer oder mehrerer Einzelkomponente(n) (1.1) ermittelt.

10. Verfahren nach einem der Ansprüche 1 bis 9, **dadurch gekennzeichnet, dass** die betriebsspezifischen Daten in der/den Funkwellensendeeinheit(en) (1.3) in einer jeweiligen Prozessoreinheit weiterverarbeitet werden.

11. Verfahren nach einem der Ansprüche 1 bis 10, **dadurch gekennzeichnet, dass** nach dem Integrieren der Einzelkomponente(n) (1.1) dieser/diesen ein eindeutiger Identifikationscode zugeordnet wird.

12. Verfahren nach einem der Ansprüche 1 bis 11, **dadurch gekennzeichnet, dass** die betriebsspezifischen Daten vor dem Übertragen verschlüsselt werden.

13. Einzelkomponente (1.1) einer von einer Steuereinheit (3.3) überwachten technische Anlage (3.1), wie ein Werkzeug eines Industrieroboters, **dadurch gekennzeichnet, dass** die Einzelkomponente (1.1) eine Funkwellensendeeinheit (1.3) zum Übertragen betriebsspezifischer Daten an die Steuereinheit (3.3) aufweist.

14. Einzelkomponente nach Anspruch 13, **dadurch gekennzeichnet, dass** die Funkwellensendeeinheit (1.3) einen Datenspeicher aufweist.

15. Einzelkomponente nach Anspruch 13 oder 14, **dadurch gekennzeichnet, dass** die Funkwellensendeeinheit (1.3) auch zum Empfang von Funksignalen ausgebildet ist.

16. Einzelkomponente nach Anspruch 15, **dadurch gekennzeichnet, dass** die Funkwellensendeeinheit (1.3) zum Energiegewinn aus den empfangenen Funksignalen ausgebildet ist.

17. Einzelkomponente nach einem der Ansprüche 13 bis 16, **dadurch gekennzeichnet, dass** die Funkwellensendeeinheit (1.3) eine Prozessoreinheit aufweist.

18. Technische Anlage mit einer Steuereinheit (3.3), **gekennzeichnet durch** mindestens eine Einzelkomponente (1.1) nach einem der Ansprüche 13 bis 17.
